(19)

Europäisches
Patentamt
European
Patent Office
Office européen
des brevets

(11) **EP 2 212 647 B1**

(12) **EUROPÄISCHE PATENTSCHRIFT**

(45) Veröffentlichungstag und Bekanntmachung des
Hinweises auf die Patenterteilung:
**13.04.2011 Patentblatt 2011/15**

(51) Int Cl.:
**G01B 21/04** $^{(2006.01)}$

(21) Anmeldenummer: **08852779.1**

(86) Internationale Anmeldenummer:
**PCT/EP2008/009494**

(22) Anmeldetag: **11.11.2008**

(87) Internationale Veröffentlichungsnummer:
**WO 2009/065510 (28.05.2009 Gazette 2009/22)**

(54) **VERFAHREN ZUM KALIBRIEREN EINES KOORDINATENMESSGERÄTES**

METHOD FOR CALIBRATING A COORDINATE MEASURING DEVICE

PROCÉDÉ DE CALIBRAGE D'UN APPAREIL DE MESURE DE COORDONNÉES

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**

(30) Priorität: **20.11.2007 DE 102007057093**

(43) Veröffentlichungstag der Anmeldung:
**04.08.2010 Patentblatt 2010/31**

(73) Patentinhaber: **Carl Zeiss Industrielle
Messtechnik GmbH
73447 Oberkochen (DE)**

(72) Erfinder:
• **KUNZMANN, Steffen
01279 Dresden (DE)**

• **HELD, Tobias
86720 Nördlingen (DE)**
• **ENGEL, Thomas
73432 Aalen (DE)**

(74) Vertreter: **Witte, Weller & Partner
Phoenixbau
Königstrasse 5
70173 Stuttgart (DE)**

(56) Entgegenhaltungen:
**EP-A- 1 528 353        EP-B1- 1 051 596
WO-A-2005/071350        DE-C1- 4 439 578**

EP 2 212 647 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zum Kalibrieren eines Koordinatenmessgerätes, mit den Schritten:

- Bereitstellen eines Referenzmessobjekts mit bekannten Eigenschaften in einem Messvolumen des Koordinatenmessgerätes,

- Aufnehmen einer Vielzahl von Referenzmesswerten an dem Referenzmessobjekt, und

- Bestimmen von Kalibrierdaten anhand der Referenzmesswerte und anhand der bekannten Eigenschaften,

- wobei die Kalibrierdaten eine erste Anzahl von Polynomkoeffizienten beinhalten, die dazu ausgebildet sind, nichtlineare Messfehler des Koordinatenmessgerätes anhand von zumindest einer Polynomtransformation zu korrigieren.
'

Die Erfindung betrifft ferner ein Koordinatenmessgerät mit einer Aufnahme für ein Messobjekt, mit einem Sensor zum Erzeugen von positionsabhängigen Messwerten von dem Messobjekt, und mit einer Auswerte- und Steuereinheit zum Steuern des Sensors und zum Verarbeiten der Messwerte, wobei die Auswerte- und Steuereinheit dazu ausgebildet ist, Kalibrierdaten mit Hilfe eines Referenzmessobjekts mit bekannten Eigenschaften zu bestimmen, und wobei die Kalibrierdaten eine Anzahl von Polynomkoeffizienten beinhalten, die dazu ausgebildet sind, nichtlineare Messfehler des Koordinatenmessgerätes anhand von zumindest einer Polynomtransformation zu korrigieren.

Ein Verfahren und ein Koordinatenmessgerät dieser Art sind dem Grunde nach aus EP 1 051 596 B1 bekannt, wobei diese Druckschrift allerdings den Aufbau des Koordinatenmessgerätes nicht im Detail offenbart.

Koordinatenmessgeräte im Sinne der vorliegenden Erfindung besitzen einen Sensor, der relativ zu einem Messobjekt beweglich ist. Typischerweise wird das Messobjekt auf einem Messtisch oder einer anderen geeigneten Aufnahme platziert. Der Sensor wird in eine definierte Position relativ zu dem Messobjekt gebracht. Anschließend lassen sich Raumkoordinaten von definierten Messpunkten an dem Messobjekt bestimmen, indem die Position des Sensors im Messvolumen und eventuell weitere vom Sensor gelieferte Messdaten ausgewertet werden. Mit einem solchen Koordinatenmessgerät kann man geometrische Abmessungen des Messobjekts bis hin zu Form- und Konturverläufen bestimmen, indem man die Raumkoordinaten an einer Vielzahl von Messpunkten aufnimmt. Eine typische Anwendung für Koordinatenmessgeräte ist daher die Qualitätskontrolle von Werkstücken.

In vielen Fällen besitzen Koordinatenmessgeräte einen so genannten taktilen messenden Sensor. Dies ist ein Sensor mit einer Sensorbasis, die relativ zu dem Messobjekt bewegt werden kann. Der Sensor besitzt ferner ein Tastelement, häufig in Form eines Taststiftes, mit dem ein Messpunkt an dem Messobjekt angetastet wird. Das Tastelement ist relativ zu der Sensorbasis beweglich, so dass es beim Antasten eines Messpunktes ausgelenkt wird. Messelemente im Sensor dienen dazu, diese Auslenkungen relativ zur Sensorbasis zu bestimmen, um auf diese Weise eine hohe Messgenauigkeit zu ermöglichen. In der Regel werden die Auslenkungen des Tastelements relativ zur Sensorbasis mit Hilfe einer sog. Transformationsmatrix in ein Koordinatensystem transformiert, das die Position des Sensors im Messvolumen angibt. Die Koeffizienten der Transformationsmatrix werden in einem Kalibriervorgang berechnet, in dem Referenzmesswerte an einem Referenzmessobjekt mit bekannten Eigenschaften aufgenommen werden.

Die eingangs genannte EP 1 051 596 B1 offenbart ein solches Kalibrierverfahren, bei dem zunächst die Position und der Radius einer am Ende des Taststiftes angeordneten Tastkugel bestimmt werden und bei dem anschließend die Koeffizienten der Transformationsmatrix berechnet werden. Das Verfahren nach EP 1 051 596 B1 sieht außerdem vor, dass anhand einer Vielzahl von weiteren Referenzmesswerten eine Fehlertabelle bestimmt wird, die Messabweichungen in Abhängigkeit von der Stärke der Auslenkung des Tastelements und in Abhängigkeit von der jeweiligen Messposition repräsentiert. Diese Fehlertabelle kann in Form einer so genannten Look-up-Tabelle oder alternativ in Form einer Polynomfunktion mit Polynomkoeffizienten bereitgestellt werden. Im letztgenannten Fall dient die Polynomfunktion dazu, nichtlineare Messabweichungen zu korrigieren, indem das nichtlineare Verhalten des Sensörsystems mit Hilfe der Polynomfunktion rechnerisch linearisiert wird.

Die Kalibrierung beinhaltet hiernach also nicht nur die Bestimmung der Koeffizienten für die Transformationsmatrix, sondern auch die Bestimmung der geeigneten Polynomkoeffizienten, die die verbleibenden, nichtlinearen Messabweichungen repräsentieren.

Das Verfahren nach EP 1 051 596 B1 benötigt eine hohe Anzahl von Referenzmesswerten und ist daher relativ zeitaufwendig. Dies ist von Nachteil, weil eine Kalibrierung im Betrieb des Koordinatenmessgerätes häufig wiederholt werden muss, um hochgenaue Messungen zu ermöglichen.

Um die Kalibrierung eines Koordinatenmessgerätes mit einem messenden Sensor zu beschleunigen, ist es wünschenswert, die Anzahl der Parameter oder Koeffizienten, die mit Hilfe der Kalibrierung bestimmt werden müssen, zu minimieren. Je weniger Parameter/Koeffizienten bestimmt werden müssen, desto weniger Referenzmesswerte werden benötigt. Andererseits darf die Minimierung nicht dazu führen, dass signifikante Messabweichungen unberücksichtigt bleiben.

Bei der Suche nach einem verbesserten Kalibrierverfahren hat sich gezeigt, dass eine Polynomtransformation zur Korrektur von Nichtlinearitäten teilweise starke Messabweichungen an solchen Stellen hervorrufen kann, die nicht durch Referenzmesswerte gestützt sind. Mit anderen Worten können durch eine Polynomtransformation "neue" nichtlineare Messabweichungen hervorgerufen werden, selbst wenn die Polynomtransformation an den Stützstellen, die mit Referenzmesswerten unterlegt sind, sehr gute Korrekturergebnisse liefert.

Vor diesem Hintergrund ist es eine Aufgabe der vorliegenden Erfindung, ein Verfahren zum Kalibrieren eines Koordinatenmessgerätes anzugeben, mit dem sich Messfehler aufgrund von nichtlinearem Systemverhalten einfacher und mit hoher Genauigkeit korrigieren lassen. Es ist insbesondere eine Aufgabe der Erfindung, ein robustes Kalibrierverfahren anzugeben, das auch abseits der durch Referenzmesswerte gestützten Messpositionen eine genaue Messung ermöglicht. Es ist ferner eine Aufgabe der Erfindung, ein entsprechendes Koordinatenmessgerät anzugeben.

Gemäß einem Aspekt der vorliegenden Erfindung werden diese Aufgaben durch ein Verfahren gemäß Anspruch 1 gelöst, bei dem die erste Anzahl von Polynomkoeffizienten in einem iterativen Verfahren auf eine geringere zweite Anzahl reduziert wird, wobei eine Vielzahl von Paaren von Polynomkoeffizienten gebildet wird, und wobei jeweils ein Polynomkoeffizient eines Paares eliminiert wird, wenn eine statistische Abhängigkeit zwischen den Polynomkoeffizienten des Paares größer ist als ein definierter Schwellenwert.

Nach einem weiteren Aspekt der Erfindung wird diese Aufgabe durch ein Koordinatenmessgerät gemäß Anspruch 11 gelöst, bei dem die Auswerte- und Steuereinheit dazu ausgebildet ist, eine erste Anzahl von Polynomkoeffizienten in einem iterativen Verfahren auf eine geringere zweite Anzahl zu reduzieren, wobei eine Vielzahl von Paaren von Polynomkoeffizienten gebildet wird, und wobei jeweils ein Polynomkoeffizient eines Paares eliminiert wird, wenn eine statistische Abhängigkeit zwischen den Polynomkoeffizienten des Paares größer ist als ein definierter Schwellenwert.

Besonders vorteilhaft lässt sich das neue Verfahren in Form eines Computerprogramms realisieren, mit Programmcode, der auf einem geeigneten Datenträger gespeichert ist und der dazu ausgebildet ist, das neue Kalibrierverfahren auszuführen, wenn der Programmcode in einer Auswerte- und Steuereinheit eines Koordinatenmessgerätes abläuft.

Das neue Kalibrierverfahren basiert weiterhin auf der Idee, eine Polynomtransformation zur Korrektur von nichtlinearen Messfehlern eines Koordinatenmessgerätes zu verwenden. Wie sich gezeigt hat, hängt die Qualität der Korrektur allerdings stark davon ab, welche und wie viele Polynomkoeffizienten im Rahmen der Kalibrierung bestimmt werden. Es hat sich gezeigt, dass eine zu große Anzahl von Polynomkoeffizienten zu Transformationsgleichungen führt, die zwar an den Stellen, die durch Referenzmesswerte gestützt sind, gute Korrekturergebnisse liefern, jedoch an anderen Stellen starke nichtlineare Abweichungen hervorrufen können. Dies lässt sich vermeiden, indem ein "optimaler" Satz an Polynomkoeffizienten für eine bestimmte Kalibrieraufgabe verwendet wird. Die Schwierigkeit besteht darin, diesen "optimalen" Satz an Polynomkoeffizienten zu finden. Das neue Kalibrierverfahren ermöglicht es, diese Schwierigkeit zu überwinden, indem die Anzahl der verwendeten Polynomkoeffizienten in einem iterativen Verfahren optimiert wird. Dabei werden "unnötige" Polynomkoeffizienten aus einer Menge von zunächst bereitgestellten Polynomkoeffizienten eliminiert. Eliminiert werden insbesondere Polynomkoeffizienten, die mit zumindest einem anderen Polynomkoeffizienten eine starke statistische Abhängigkeit aufweisen. Anders ausgedrückt werden solche Polynomkoeffizienten eliminiert, die keinen nennenswerten unabhängigen Anteil zur Korrektur der nichtlinearen Messabweichungen liefern. Es hat sich gezeigt, dass die auf diese Weise bestimmten Kalibrierdaten genauere Messergebnisse an Stellen ermöglichen, die nicht durch Referenzmesswerte gestützt sind, ohne die Genauigkeit an den durch Referenzmesswerte gestützten Messpositionen nennenswert zu beeinträchtigen.

Das neue Verfahren ermöglicht es, einen reduzierten Satz an Polynomkoeffizienten zur Korrektur von nichtlinearen Messfehlern zu finden, ohne dass die Genauigkeit der Messungen mit den Kalibrierdaten darunter leidet. Dabei ist die Auswahl und Bestimmung der Polynomkoeffizienten selbstlernend. Das neue Verfahren passt sich daher an unterschiedliche Messumgebungen automatisch an. Infolgedessen reduziert sich der Aufwand für die Kalibrierung. Darüber hinaus kann das durch den iterativen Prozess gewonnene Wissen bei zukünftigen Kalibrieraufgaben mit vergleichbaren Messbedingungen vorteilhaft genutzt werden, um die Anzahl der zu bestimmenden Korrekturkoeffizienten von vornherein gezielt zu reduzieren. Jeder Kalibriervorgang liefert somit a-priori-Wissen für zukünftige Kalibriervorgänge, was zur weiteren Beschleunigung von Kalibriervorgängen verwendet werden kann.

Insgesamt bietet das neue Verfahren eine einfache, schnelle und robuste Kalibrierung eines Koordinatenmessgerätes mit einer mehrdimensionalen, nichtlinearen Sensoreinheit. Die oben genannte Aufgabe ist daher vollständig gelöst.

In einer Ausgestaltung der Erfindung wird für jedes Paar von Polynomkoeffizienten ein Korrelationswert als Maß für die statistische Abhängigkeit bestimmt, wobei der Korrelationswert eine Kreuzkorrelation zwischen den Polynomkoeffizienten des Paares repräsentiert.

In bevorzugten Ausführungsbeispielen dieser Ausgestaltung wird der so genannte Korrelationskoeffizient zwischen den beiden Polynomkoeffizienten jedes Paares bestimmt. Der Korrelationskoeffizient ist eine auf die jeweiligen Standardabweichungen der Polynomkoeffizienten normierte Kennzahl, die zwischen -1 und 1 liegen kann. Er ist ein Maß für die linearen statistischen Abhängigkeiten zwischen den beiden Polynomkoeffizienten eines Paares. Anstelle des Korrelationskoeffizienten könnte jedoch grundsätzlich auch eine andere, mathematisch mit diesem zusammenhängende Größe verwendet werden, wie etwa die (nicht-normierte) Kovarianz. Generell beschränkt sich diese Ausgestaltung auf die Analyse von linearen statistischen Abhängigkeiten zwischen den Polynomkoeffizienten jedes Paares. Diese Ausgestaltung vereinfacht und beschleunigt den Kalibriervorgang, und sie liefert gute Ergebnisse in Bezug auf die Genauigkeit und Robustheit der Kalibrierdaten. Prinzipiell können jedoch in anderen Ausgestaltungen auch statistische Abhängigkeiten höherer Ordnungen verwendet werden.

In einer weiteren Ausgestaltung wird der Korrelationswert betragsmäßig mit einem Schwellenwert verglichen, der eine Kreuzkorrelation größer als 0,4 repräsentiert, vorzugsweise größer als 0,6, und besonders bevorzugt größer als etwa 0,8.

In dieser Ausgestaltung wird einer der Polynomkoeffizienten des Paares eliminiert, wenn der Betrag des Korrelationskoeffizienten für die beiden Polynomkoeffizienten größer ist als die angegebenen Schwellenwerte. Praktische Untersuchungen haben gezeigt, dass die Eliminierung eines der Polynomkoeffizienten des Paares die gewünschten Vorteile bringt, wenn die lineare statistische Abhängigkeit die angegebenen Schwellenwerte übersteigt.

In einer weiteren Ausgestaltung repräsentiert jeder Polynomkoeffizient eine Polynomordnung, wobei jeweils derjenige Polynomkoeffizient des Paares eliminiert wird, der eine höhere Polynomordnung repräsentiert.

Die Polynomordnung gibt an, mit welcher Potenz der jeweilige Polynomterm in die Polynomtransformation eingeht. Nach dieser Ausgestaltung wird von zwei korrelierten Polynomkoeffizienten jeweils derjenige eliminiert, der einer höheren Polynomordnung zugewiesen ist. Repräsentieren zwei korrelierte Polynomkoeffizienten jeweils gleiche Polynomordnungen, kann einer von beiden eliminiert werden, ohne dass es eine bevorzugte Priorität gibt. Bei unterschiedlichen Polynomordnungen ist es hingegen von Vorteil, den Polynomkoeffizienten mit der höheren Polynomordnung zu eliminieren, weil die Kalibrierung dadurch robuster wird, d.h. die Kalibrierdaten lassen sich mit einer höheren Genauigkeit und Zuverlässigkeit auch für Messpositionen verwenden, die nicht durch Referenzmesswerte gestützt sind.

In einer weiteren Ausgestaltung beinhalten die Kalibrierdaten außerdem Transformationskoeffizienten einer Transformationsmatrix, die einen linearen Zusammenhang zwischen den Referenzmesswerten und den bekannten Eigenschaften repräsentiert.

Diese Ausgestaltung ist besonders vorteilhaft für Koordinatenmessgeräte, bei denen ein messender Sensor mehrdimensionale Messwerte liefert. Alternativ hierzu kann das neue Kalibrierverfahren prinzipiell auch bei einfacheren Koordinatenmessgeräten verwendet werden, bei denen lediglich ein schaltender Tastkopf verwendet wird. Die neue Kalibrierung kann sich dann beispielsweise auf die Korrektur von Führungsfehlern entlang der Bewegungsbahnen des Tastkopfes beschränken. In der bevorzugten Ausgestaltung liefert die Kalibrierung jedoch auch Kalibrierdaten für die Transformation der Sensormessdaten in das Koordinatensystem des Koordinatenmessgerätes. Da solche Koordinatenmessgeräte mit "messenden Sensoren" in aller Regel für Messaufgaben mit besonders hohen Anforderungen an die Messgenauigkeit verwendet werden, eignet sich das neue Kalibrierverfahren für solche Koordinatenmessgeräte besonders gut.

In einer weiteren Ausgestaltung wird ferner eine Vielzahl von Paaren mit jeweils einem Polynomkoeffizienten und einem Transformationskoeffizienten gebildet, wobei der Polynomkoeffizient eines solchen Paares eliminiert wird, wenn eine statistische Abhängigkeit zwischen dem Polynomkoeffizienten und dem Transformationskoeffizienten des Paares größer ist als ein definierter Schwellenwert.

In dieser Ausgestaltung werden Polynomkoeffizienten, die zur Linearisierung der Messwerte dienen, auch dann eliminiert, wenn eine signifikante Korrelation mit Koeffizienten der Transformationsmatrix besteht. Diese Ausgestaltung eliminiert weitere statistische Abhängigkeiten zwischen den Kalibrierdaten, und sie ermöglicht daher eine besonders robuste, schnelle und genaue Fehlerkorrektur.

In einer weiteren Ausgestaltung wird in Abhängigkeit von der Differenz zwischen der ersten und der zweiten Anzahl ein Kennwert bereitgestellt, der ein Qualitätskriterium für das Koordinatenmessgerät repräsentiert.

Diese Ausgestaltung nutzt die Informationen, die sich aus der Minimierung der Polynomkoeffizienten ergeben, in vorteilhafter Weise. Beispielsweise deutet eine geringe zweite Anzahl bzw. eine große Differenz zwischen der ersten und zweiten Anzahl darauf hin, dass das entsprechende Koordinatenmessgerät nur relativ geringe Nichtlinearitäten aufweist, so dass es sich prinzipiell für hochgenaue Messungen eignet. Gleiches gilt für einen mehrdimensionalen Sensor, bei dem nach der Eliminierung der statistisch abhängigen Polynomkoeffizienten nur eine geringe Anzahl von Polynomkoeffizienten übrig bleibt. Des Weiteren kann einzelnen Messpunkten in Abhängigkeit von den verbleibenden Polynomkoeffizienten eine Information über die lokale Messunsicherheit zugeordnet werden.

In einer weiteren Ausgestaltung werden die eliminierten Polynomkoeffizienten zusammen mit Parameterdaten, die das Koordinatenmessgerät repräsentieren, in einer Wissensdatenbank bereitgestellt.

Die Parameterdaten beinhalten insbesondere Informationen über die Eigenschaften des kalibrierten Koordinatenmessgerätes und/oder Sensors, wie etwa das Gewicht und/oder die Länge des verwendeten Tastelements, den Gestellaufbau (z.B. Horizontalarm, Portal, Brücke) des Koordinatenmessgerätes etc. Wenn bestimmte Polynomkoeffizienten nach dem neuen Verfahren eliminiert wurden, kann diese Information zusammen mit den Parameterdaten ein vorteilhaftes a-priori-Wissen für zukünftige Kalibriervorgänge darstellen, so dass man auf die eliminierten Polynomkoeffizienten ggf. von vornherein bei der Modellbildung verzichten kann. Daher ermöglicht diese Ausgestaltung eine weitere Vereinfachung bei der Kalibrierung von Koordinatenmessgeräten.

In einer weiteren Ausgestaltung werden die Referenzmesswerte mit Hilfe eines taktilen Sensors aufgenommen, der eine Sensorbasis, ein relativ zur Sensorbasis bewegliches Tastelement und eine Anzahl von Messelementen aufweist, die dazu ausgebildet sind, eine Relativposition des Tastelements relativ zur Sensorbasis zu bestimmen, wobei die Polynomkoeffizienten nichtlineare Eigenschaften der Messelemente repräsentieren.

Die Kalibrierung eines messenden taktilen Sensors an einem Koordinatenmessgerät ist mit den bislang bekannten Verfahren besonders aufwendig, da hier eine große Anzahl an Freiheitsgraden existiert, die bei der Kalibrierung berücksichtigt werden müssen. Mit dem neuen Kalibrierverfahren lässt sich der Aufwand für die Kalibrierung eines solchen taktilen messenden Sensors stark reduzieren, ohne die prinzipbedingt mögliche, hohe Messgenauigkeit zu beeinträchtigen. Die Anwendung des neuen Verfahrens bei einem taktilen messenden Sensor ist daher ein besonders bevorzugter Anwendungsfall.

In einer weiteren Ausgestaltung werden die Referenzmesswerte mit Hilfe eines berührungslos messenden Sensors aufgenommen. Beispielsweise kann es sich um einen optischen, kamerabasierten Sensor und/oder einen kapazitiven Näherungssensor handeln.

Wenngleich das neue Verfahren in erster Linie zur Lösung von Problemen bei der Kalibrierung von Koordinatenmessgeräten mit taktilen messenden Sensoren entwickelt wurde, lässt es sich auch vorteilhaft bei anderen mehrdimensionalen Sensoren einsetzen. Wie sich gezeigt hat, führt die iterative Eliminierung von Polynomkoeffizienten in Abhängigkeit von deren statistischen Abhängigkeiten auch bei solchen Sensoren zu einer Reduzierung des Kalibrieraufwandes und zu robusteren Kalibrierdaten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine vereinfachte Darstellung eines Koordinatenmessgerätes nach einem Aus- führungsbeispiel der Erfindung,

Fig. 2     ein Flussdiagramm zur Erläuterung eines Ausführungsbeispiels des neuen Ver- fahrens,

Fig. 3     ein Flussdiagramm zur Erläuterung einer ersten Variante des Verfahrens nach Fig. 2, und

Fig. 4     ein Flussdiagramm zur Erläuterung einer zweiten Variante des Verfahrens aus Fig. 2.

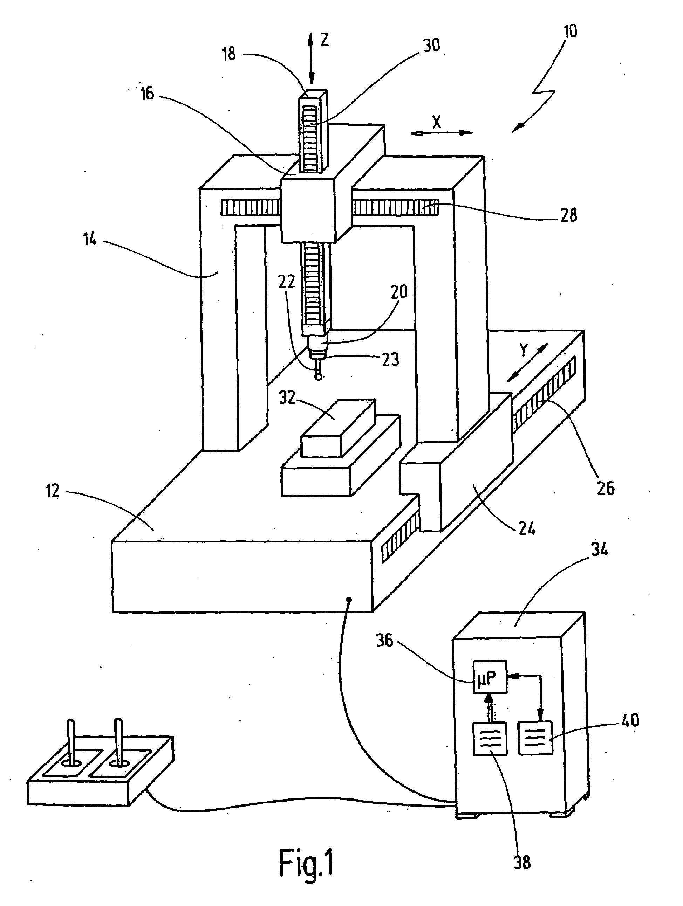

In Fig. 1 ist ein Koordinatenmessgerät in seiner Gesamtheit mit der Bezugsziffer 10 bezeichnet. Es handelt sich hier um ein Koordinatenmessgerät in Portalbauweise, das speziell zur Vermessung von Werkstücken ausgebildet ist. Die Erfindung ist jedoch nicht auf Koordinatenmessgeräte im engeren Sinne beschränkt und kann beispielsweise auch bei Werkzeugmaschinen oder anderen Maschinen eingesetzt werden, bei denen mit Hilfe eines geeigneten Sensors mehrdimensionale Raumkoordinaten an einem Messobjekt bestimmt werden. Dementsprechend beinhaltet der Begriff "Koordinatenmessgerät" im Sinne der vorliegenden Erfindung auch solche Maschinen.

Das Koordinatenmessgerät 10 besitzt eine Basis 12, auf der ein Portal 14 angeordnet ist. Am oberen Querträger des Portals 14 sitzt ein Schlitten 16, der eine Pinole 18 trägt. Am unteren freien Ende der Pinole 18 ist ein Sensorkopf 20 angeordnet. Der Sensorkopf 20 ist hier ein taktiler messender Sensorkopf mit einer Aufnahme für einen Taststift 22, der relativ zu der Aufnahme verschwenkbar ist. Mit der Bezugsziffer 23 ist ein hier nur schematisch dargestelltes Messelement bezeichnet, mit dessen Hilfe die Auslenkungen des Taststiftes 22 relativ zu der Aufnahme bestimmt werden kann.

Am Fuß des Portals 14 ist ein Antrieb 24 angeordnet, der dazu ausgebildet ist, das Portal 14 in Längsrichtung zu bewegen. Diese Längsrichtung wird üblicherweise als y-Achse bezeichnet. Die Position des Portals 14 relativ zu der Basis 12 kann mit Hilfe eines Messsystems 26 bestimmt werden. Typischerweise handelt es sich bei dem Messsystem 26 um Glasmaßstäbe mit einer Skala, die mit Hilfe eines geeigneten Sensors (hier nicht dargestellt) abgetastet werden kann.

In gleicher Weise ist der Schlitten 16 relativ zu dem Portal 14 in einer Rchtung beweglich, die üblicherweise als x-Achse bezeichnet wird. Des Weiteren ist die Pinole 18 relativ zu dem Schlitten 16 entlang einer Richtung beweglich, die üblicherweise als z-Achse bezeichnet wird. Die jeweilige Raumposition des Schlittens 16 und der Pinole 18 kann mit Hilfe von weiteren Messsystemen 28, 30 bestimmt werden. Insgesamt kann der Sensorkopf 20 aufgrund der Antriebe des Portals 14, des Schlittens 16 und der Pinole 18 innerhalb eines Messvolumens bewegt werden, das durch die maximalen Verfahrwege des Portals 14, des Schlittens 16 und der Pinole 18 definiert ist.

Innerhalb des Messvolumens ist ein Messobjekt 32 auf der Basis 12 angeordnet. Zur Durchführung einer Messung wird der Sensorkopf 20 an das Messobjekt 32 herangefahren, bis die Tastkugel am freien unteren Ende des Taststiftes 22 einen gewünschten Messpunkt an dem Messobjekt 32 berührt. Die Berührung wird anhand der Auslenkung des Taststiftes relativ zur Basis des Sensorkopfes detektiert. Die Raumkoordinaten des angetasteten Messpunktes ergeben sich aus den jeweiligen Positionen entlang der Achsen x, y und z und aus der Auslenkung des Taststiftes 22.

Die Führungsbahnen des Koordinatenmessgerätes 10 entlang der Achsen x, y und z und auch die Auslenkungen des Taststiftes 22 können aufgrund von Fertigungstoleranzen, Temperaturschwankungen, Alterungseinflüssen etc. variieren. Des weiteren können die Messergebnisse der Messwertgeber entlang dieser Bewegungsachsen Nichtlinearitäten aufweisen. Daher muss das Koordinatenmessgerät 10 vor der Durchführung einer Messung kalibriert werden, indem ein Referenzmessobjekt mit bekannten Eigenschaften vermessen wird. Durch Vergleich der Referenzmesswerte mit den bekannten Eigenschaften des Referenzmessobjekts lassen sich Kalibrierdaten bestimmen, die bei nachfolgenden Messungen an realen Messobjekten zur Korrektur von systematischen Messfehlern verwendet werden.

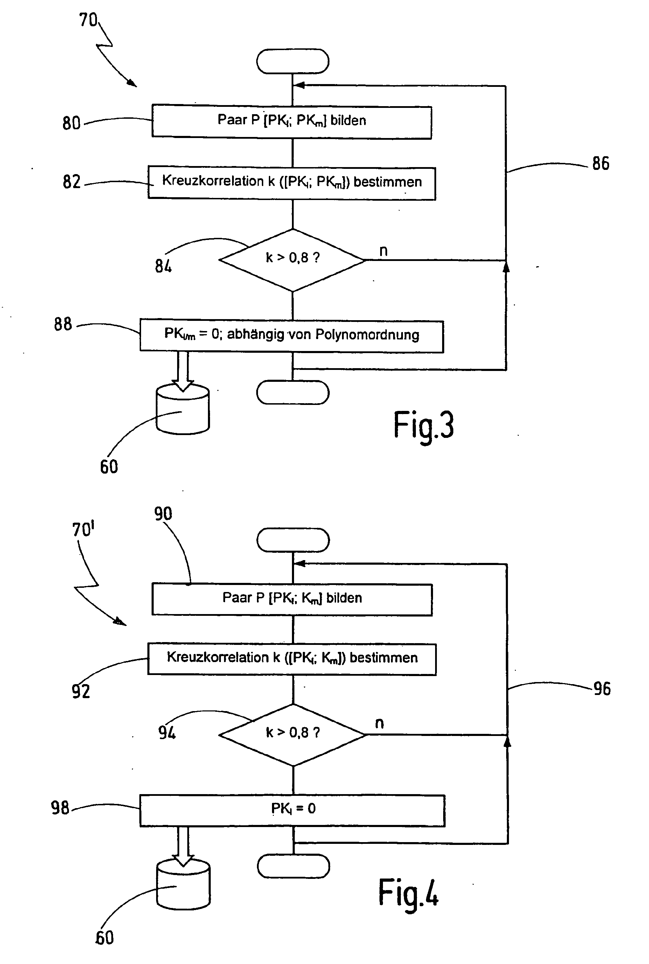

Mit der Bezugsziffer 34 ist eine Auswerte- und Steuereinheit bezeichnet, die die Bewegungen des Sensorkopfes 20 steuert und die Messwerte der Messelemente 23 und der Messsysteme 26, 28, 30 einliest und verarbeitet. Darüber hinaus lässt sich mit Hilfe der Auswerte- und Steuereinheit 34 auch der Kalibriervorgang durchführen. In bevorzugten Ausführungsbeispielen beinhaltet die Auswerte- und Steuereinheit 34 einen Prozessor 36 und zumindest zwei Speicher 38, 40. Im Speicher 38 ist ein Computerprogramm gespeichert, das in dem bevorzugten Ausführungsbeispiel dazu ausgebildet ist, ein Kalibrierverfahren durchzuführen, wie es nachfolgend anhand der Fig. 3 bis 4 beschrieben wird. In dem Speicher 40 werden u.a. die Kalibrierdaten abgespeichert, die im Verlauf des Kalibriervorgangs bestimmt werden.

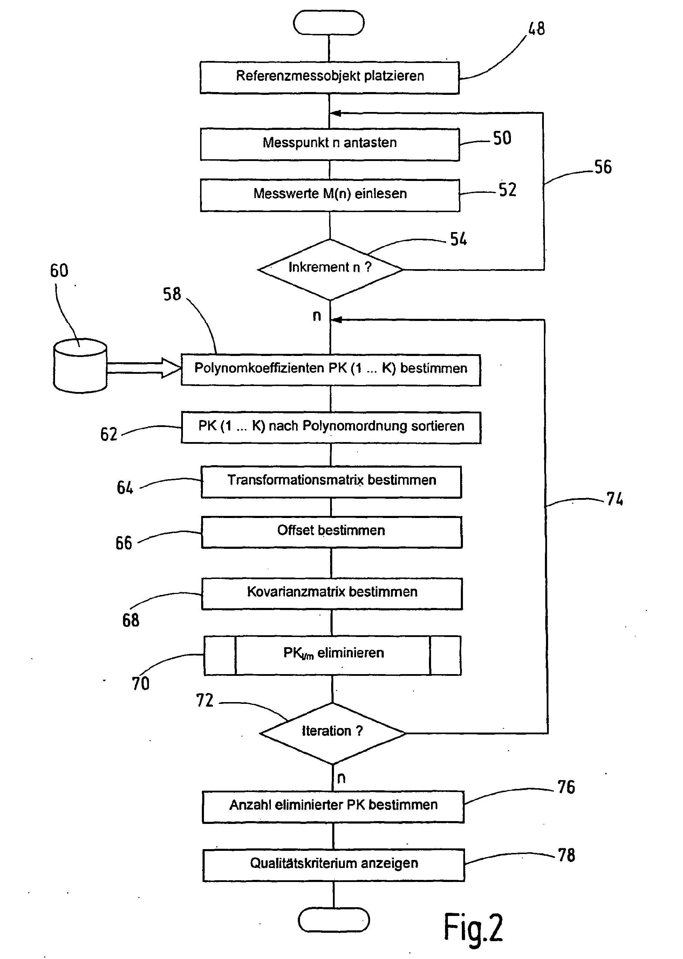

Gemäß Fig. 2 beginnt das Kalibrierverfahren zum Kalibrieren des Sensorkopfes in diesem Fall damit, dass ein Referenzmessobjekt 32 mit bekannten Eigenschaften innerhalb des Messvolumens platziert wird. Das Referenzmessobjekt ist oder beinhaltet häufig eine Kugel mit einem bekannten Radius R, wie dies in der eingangs genannten EP 1 O51 596 B1 beschrieben ist. Gemäß Schritt 50 wird ein Messpunkt n an dem Referenzmessobjekt angetastet, und es werden gemäß Schritt 52 die Messwerte S (n) der Messelemente 23 und Messsysteme 26, 28, 30 eingelesen. Gemäß Schritt 54 folgt eine Entscheidung, ob Messdaten für weitere Messpunkte n aufgenommen werden sollen. Gegebenenfalls kehrt das Verfahren gemäß Schleife 56 zum Schritt 50 zurück.

Wenn die Aufnahme der Messdaten abgeschlossen ist, werden gemäß Schritt 58 Polynomkoeffizienten PK (1 ... K) für eine Polynomtransformation bestimmt, mit deren Hilfe die Messdaten S (n) linearisiert werden. Sowohl die Anzahl als auch der jeweilige Wert der Polynomkoeffizienten ist zunächst unbekannt. Man beginnt daher beispielsweise mit einem Polynom folgender Art:

$$S' = (S_1 + C_{11} \cdot S_1 \cdot S_2 + C_{12} \cdot S_1 \cdot S_3 + C_{13} \cdot S_1 \cdot S_1 \cdot S_2 + ...$$
$$S_2 + C_{21} \cdot S_2 \cdot S_1 + C_{22} \cdot S_2 \cdot S_3 + ...,$$
$$S_3 + C_{31} \cdot S_3 \cdot S_1 + C_{32} \cdot S_3 \cdot S_2 + ...),$$

wobei $S_1$, $S_2$, $S_3$ Messdaten der Messelemente des Sensorkopfes am Messpunkt n sind, und wobei $C_{11}$, $C_{12}$, $C_{13}$ ... die Polynomkoeffizienten des Polynoms darstellen.

S' bezeichnet das linearisierte dreidimensionale Messsignal der Messelemente nach der Polynomtransformation. In Abhängigkeit von a-priori-Wissen, das einer Wissensdatenbank 60 entnommen sein kann, können Polynomterme, die bekanntermaßen nicht benötigt werden, von vornherein eliminiert werden, indem der entsprechende Polynomkoeffizient zu Null gesetzt wird.

Die Polynomkoeffizienten werden berechnet, indem eine Zielfunktion minimiert wird. In bevorzugten Ausführungsbeispielen ist die Zielfunktion die Minimierung aller Fehlerquadrate zwischen den Referenzmesswerten und den bekannten Eigenschaften des Referenzmessobjekts. Den einschlägigen Fachleuten ist diese Art der Berechnung von Polynomkoeffizienten bekannt.

Gemäß Schritt 62 werden die berechneten Polynomkoeffizienten PK (1 ... K) anschließend sortiert, wobei hier die Polynomordnung das Sortierkriterium darstellt. Gemäß den Schritten 64 und 66 werden anschließend eine Transformationsmatrix und einso genannter Offset aus den Messdaten bestimmt. Die Transformationsmatrix enthält Transformationskoeffizienten, mit deren Hilfe die (linearisierten) Messdaten der Messelemente 23, d.h. die Auslenkungen des Taststiftes 22, in das Koordinatensystem des Koordinatenmessgerätes 10 mit den Koordinatenachsen x, y und z transformiert werden. Der Offset gibt den Mittelpunkt der Tastkugel am freien Ende des Taststiftes 22 an. Die Berechnung der Transformationsmatrix und des Offset ist den einschlägigen Fachleuten ebenfalls bekannt und beispielsweise in der eingangs erwähnten EP 1 O51 596 B1 beschrieben, auf die hier insoweit vollumfänglich Bezug genommen wird.

Gemäß Schritt 68 wird anschließend eine Kovarianzmatrix bestimmt, die sämtliche Kovarianzen zwischen allen berechneten Polynomkoeffizienten enthält. Vorteilhafterweise kann die Kovarianzmatrix auch die Kovarianzen zu allen weiteren berechneten Werten, insbesondere den Transformationskoeffizienten, beinhalten.

Gemäß Schritt 70 werden anschließend Paare mit jeweils zwei Polynomkoeffizienten $PK_l$ und $PK_m$ gebildet. Die Polynomkoeffizienten $PK_l$ und $PK_m$ werden auf statistische Abhängigkeiten hin untersucht, wie nachfolgend anhand Fig. 3 näher erläutert ist. Übersteigen die statistischen Abhängigkeiten der Polynomkoeffizienten eines solchen Paars einen definierten Schwellenwert, wird einer der Polynomkoeffizienten eliminiert. Vorzugsweise wird derjenige Polynomkoeffizient des Paars eliminiert, der nach der in Schritt 62 gebildeten Reihenfolge eine höhere Polynomordnung repräsentiert. Anschließend erfolgt gemäß Schritt 72 eine Entscheidung, ob ein weiterer Iterationsschritt sinnvoll ist. Wenn ja, kehrt das Verfahren gemäß der Schleife 74 zum Schritt 58 zurück, und es werden die (verbleibenden) Polynomkoeffizienten, die Transformationskoeffizienten und der Offset erneut berechnet. Dabei werden allerdings alle zuvor eliminierten Polynomkoeffizienten zu Null gesetzt, d.h. das Polynom für die Linearisierung vereinfacht sich mit jedem Iterationsschritt.

Wenn die Iterationsschritte keine nennenswerten Veränderungen mehr ergeben, werden die Iterationsdurchläufe 74 beendet. In bevorzugten Varianten des Verfahrens wird die Anzahl der eliminierten Polynomkoeffizienten und damit auch die Anzahl der verbleibenden Polynomkoeffizienten bestimmt. Gemäß Schritt 78 wird die Anzahl der verbleibenden Polynomkoeffizienten und/oder die Anzahl der eliminierten Polynomkoeffizienten als Maß für ein Qualitätskriterium des Koordinatenmessgerätes 10 angezeigt. Es versteht sich, dass die berechneten Koeffizienten außerdem in dem Speicher 40 der Auswerte- und Steuereinheit 34 abgespeichert werden, so dass sie als Kalibrierdaten zur Verfügung stehen, die bei nachfolgenden Messungen zur Korrektur von systematischen Fehlern verwendet werden können.

Fig. 3 zeigt anhand eines weiteren Flussdiagramms die Verfahrensschritte, die in bevorzugten Ausführungsbeispielen zur Eliminierung von statistisch abhängigen Polynomkoeffizienten führen. Gemäß Schritt 80 werden Paare P [$PK_l$; $PK_m$] von Polynomkoeffizienten $PK_l$ und $PK_m$ gebildet. Anschließend wird gemäß Schritt 82 die Kreuzkorrelation k ([$PK_l$; $PK_m$]) zwischen den Polynomkoeffizienten des Paars bestimmt. Gemäß Schritt 84 wird dann der Betrag der Kreuzkorrelation k mit einem Schwellenwert verglichen, der in einem bevorzugten Ausführungsbeispiel bei 0,8 liegt. Der Schwellenwert kann jedoch auch größer oder kleiner sein. Je größer er ist, desto stärkere statistische Abhängigkeiten zwischen den Polynomkoeffizienten werden zugelassen, da das Verfahren gemäß der Schleife 86 zum Verfahrensschritt 80 zurückkehrt, wenn der Schwellenwert nicht überschritten wird. Wird der Schwellenwert hingegen überschritten, wird einer der beiden Polynomkoeffizienten des Paars zu Null gesetzt, d.h. eliminiert. Vorzugsweise wird derjenige Polynomkoeffizient eliminiert, der eine höhere Polynomordnung repräsentiert. Anschließend kehrt das Verfahren zum Schritt 80 zurück, bis für sämtliche Paare von Polynomkoeffizienten ein Vergleich der Kreuzkorrelation mit dem Schwellenwert stattgefunden hat. Eliminierte Polynomkoeffizienten werden in bevorzugten Ausführungsbeispielen in der Wissensdatenbank 60 hinterlegt, um ein a-priori-Wissen für zukünftige, ähnliche Kalibrieraufgaben bereitzustellen.

Fig. 4 zeigt ein alternatives Verfahren zum Eliminieren von Polynomkoeffizienten, wobei das Verfahren nach Fig. 4 in bevorzugten Ausführungsbeispielen ergänzend zu dem Verfahren nach Fig. 3 verwendet wird. Gemäß Schritt 90 aus Fig. 4 werden Paare P [$PK_l$; $K_m$] mit jeweils einem Polynomkoeffizienten $PK_l$ und einem Transformationskoeffizienten $K_m$ der Transformationsmatrix gebildet. Alternativ und/oder ergänzend können auch die Koeffizienten des Offsetvektors für die Paarbildung mit jeweils einem Polynomkoeffizienten verwendet werden. Gemäß Schritt 92 wird anschließend die Kreuzkorrelation dieses Paars bestimmt und gemäß Schritt 94 wiederum mit einem Schwellenwert verglichen. Liegt die Kreuzkorrelation des Paars oberhalb des Schwellenwertes, wird der entsprechende Polynomkoeffizient $PK_l$ zu Null gesetzt. Anderenfalls verzweigt das Verfahren gemäß der Schleife 96 direkt zum nächsten Paar. Es versteht sich, dass die Alternative gemäß Fig. 4 nur möglich ist, wenn überhaupt Transformationskoeffizienten und/oder Offsetkoeffizienten zur Verfügung stehen. Dies ist typischerweise der Fall, wenn Kalibrierdaten für einen taktilen messenden Sensor bestimmt werden sollen. Das neue Verfahren kann jedoch prinzipiell auch mit anderen Sensoren und auch unabhängig von einem bestimmten Sensor zum Kalibrieren von Koordinatenmessgeräten verwendet werden. Beispielsweise lassen sich mit Hilfe des neuen Verfahrens Kalibrierdaten zum Korrigieren von nichtlinearen Führungsfehlern entlang der Bewegungsachsen X, Y, Z des Koordinatenmessgerätes 10 bestimmen. Des Weiteren kann das neue Verfahren auch zum Kalibrieren von optischen oder anderen mehrdimensionalen Sensoren verwendet werden. Generell lässt sich das neue Verfahren in allen Fällen einsetzen, bei denen Abhängigkeiten zwischen den verschiedenen Koordinatenachsen eines mehrdimensionalen Messsystems bestehen.

## Patentansprüche

1. Verfahren zum Kalibrieren eines Koordinatenmessgerätes (10), mit den Schritten:

- Bereitstellen (48) eines Referenzmessobjekts (32) mit bekannten Eigenschaften in einem Messvolumen des Koordinatenmessgerätes (10),
- Aufnehmen (52) einer Vielzahl von Referenzmesswerten an dem Referenzmessobjekt (32), und
- Bestimmen (58, 64, 66) von Kalibrierdaten anhand der Referenzmesswerte und anhand der bekannten Eigenschaften,
- wobei die Kalibrierdaten eine erste Anzahl von Polynomkoeffizienten (PK) beinhalten, die dazu ausgebildet sind, nichtlineare Messfehler des Koordinatenmessgerätes (10) anhand von zumindest einer Polynomtransformation zu korrigieren,

**dadurch gekennzeichnet, dass** die erste Anzahl von Polynomkoeffizienten (PK) in einem iterativen Verfahren (70, 72, 74) auf eine geringere zweite Anzahl reduziert wird, wobei eine Vielzahl von Paaren von Polynomkoeffizienten gebildet (80) wird, und wobei jeweils ein Polynomkoeffizient eines Paares eliminiert (88) wird, wenn eine statistische Abhängigkeit zwischen den Polynomkoeffizienten des Paares größer ist als ein definierter Schwellenwert.

2. Verfahren nach Anspruch 1, **dadurch gekennzeichnet, dass** für jedes Paar von Polynomkoeffizienten ein Korrelationswert als Maß für die statistische Abhängigkeit bestimmt (82) wird, wobei der Korrelationswert eine Kreuzkorrelation zwischen den Polynomkoeffizienten des Paares repräsentiert.

3. Verfahren nach Anspruch 2, **dadurch gekennzeichnet, dass** der Korrelationswert betragsmäßig mit einem Schwellenwert verglichen (84) wird, der eine Kreuzkorrelation größer als 0.4 repräsentiert, vorzugsweise größer als 0.6, und besonders bevorzugt größer als etwa 0.8.

4. Verfahren nach einem der Ansprüche 1 bis 3, **dadurch gekennzeichnet, dass** jeder Polynomkoeffizient eine Polynomordnung repräsentiert (62), wobei jeweils derjenige Polynomkoeffizient des Paares eliminiert wird, der eine höhere Polynomordnung repräsentiert.

5. Verfahren nach einem der Ansprüche 1 bis 4, **dadurch gekennzeichnet, dass** die Kalibrierdaten außerdem Transformationskoeffizienten einer Transformationsmatrix beinhalten (64), die einen linearen Zusammenhang zwischen den Referenzmesswerten und den bekannten Eigenschaften repräsentiert.

6. Verfahren nach Anspruch 5, **dadurch gekennzeichnet, dass** ferner eine Vielzahl von Paaren mit jeweils einem Polynomkoeffizienten und einem Transformationskoeffizienten gebildet (92) wird, wobei der Polynomkoeffizient eines solchen Paares eliminiert (98) wird, wenn eine statistische Abhängigkeit zwischen dem Polynomkoeffizienten und dem Transformationskoeffizienten des Paares größer ist als ein definierter Schwellenwert.

7. Verfahren nach einem der Ansprüche 1 bis 6, **dadurch gekennzeichnet, dass** in Abhängigkeit von der Differenz zwischen der ersten und der zweiten Anzahl ein Kennwert bereitgestellt (78) wird, der ein Qualitätskriterium für das Koordinatenmessgerät repräsentiert.

8. Verfahren nach einem der Ansprüche 1 bis 7, **dadurch gekennzeichnet, dass** die eliminierten Polynomkoeffizienten zusammen mit Parameterdaten, die das Koordinatenmessgerät repräsentieren, in einer Wissensdatenbank (60) bereitgestellt werden.

9. Verfahren nach einem der Ansprüche 1 bis 8, **dadurch gekennzeichnet, dass** die Referenzmesswerte mit Hilfe eines taktilen Sensors aufgenommen werden, der eine Sensorbasis (20), ein relativ zur Sensorbasis bewegliches Tastelement (22) und eine Anzahl von Messelementen (23) aufweist, die dazu ausgebildet sind, eine Relativposition des Tastelements (22) relativ zu der Sensorbasis (20) zu bestimmen, wobei die Polynomkoeffizienten nichtlineare Eigenschaften der Messelemente (23) repräsentieren.

10. Verfahren nach einem der Ansprüche 1 bis 8, **dadurch gekennzeichnet, dass** die Referenzmesswerte mit Hilfe eines berührungslos messenden Sensors aufgenommen werden.

11. Koordinatenmessgerät mit einer Aufnahme (12) für ein Messobjekt (32), mit einem Sensor (20) zum Erzeugen von positionsabhängigen Messwerten von dem Messobjekt, und mit einer Auswerte- und Steuereinheit (34) zum Steuern des Sensors (20) und zum Verarbeiten der Messwerte, wobei die Auswerte- und Steuereinheit (34) dazu ausgebildet ist, Kalibrierdaten mit Hilfe eines Referenzmessobjekts mit bekannten Eigenschaften zu bestimmen, und wobei die Kalibrierdaten eine Anzahl von Polynomkoeffizienten beinhalten, die dazu ausgebildet sind, nichtlineare Messfehler des Koordinatenmessgerätes anhand von zumindest einer Polynomtransformation zu korrigieren, **dadurch ge-**

**kennzeichnet, dass** die Auswerte- und Steuereinheit (34) dazu ausgebildet ist, eine erste Anzahl von Polynomkoeffizienten in einem iterativen Verfahren auf eine geringere zweite Anzahl zu reduzieren (70, 72), wobei eine Vielzahl von Paaren von Polynomkoeffizienten gebildet (80) wird, und wobei jeweils ein Polynomkoeffizient eines Paares eliminiert wird (88), wenn eine statistische Abhängigkeit zwischen den Polynomkoeffizienten des Paares größer ist als ein definierter Schwellenwert.

12. Computerprogramm mit Programmcode, der dazu ausgebildet ist, ein Verfahren nach einem der Ansprüche 1 bis 10 auszuführen, wenn der Programmcode in einer Auswerte- und Steuereinheit eines Koordinatenmessgerätes abläuft.

**Claims**

1. A method for calibrating a coordinate measuring machine (10), comprising the steps of:

   - providing (48) a reference measurement object (32) having known properties in a measuring volume of the coordinate measuring machine (10),
   - picking up (52) a plurality of reference measured values on the reference measurement object (32), and
   - determining (58, 64, 66) calibration data using the reference measured values and using the known properties,
   - with the calibration data comprising a first number of polynomial coefficients (PK) which are selected to correct nonlinear measuring errors of the coordinate measuring machine (10) with the aid of at least one polynomial transformation,

   **characterized in that** the first number of polynomial coefficients (PK) is reduced in an iterative method (70, 72, 74) to a lesser second number, with a plurality of pairs of polynomial coefficients being formed (80), and with a polynomial coefficient of a pair being eliminated (88) in each case when a statistical dependence between the polynomial coefficients of the pair is greater than a defined threshold value.

2. The method of claim 1, **characterized in that** for each pair of polynomial coefficients a correlation value is determined (82) as a measure of the statistical dependence, with the correlation value representing a cross correlation between the polynomial coefficients of the pair.

3. The method of claim 2, **characterized in that** the correlation value is compared (84) as an absolute value with a threshold value that represents a cross correlation greater than 0.4, preferably greater than 0.6, and even more preferably greater than approximately 0.8.

4. The method of one of claims 1 to 3, **characterized in that** each polynomial coefficient represents (62) a polynomial order, with in each case that polynomial coefficient of the pair being eliminated that represents a higher polynomial order.

5. The method of one of claims 1 to 4, **characterized in that** the calibration data further comprise (64) transformation coefficients of a transformation matrix that represents a linear relationship between the reference measured values and the known properties.

6. The method of claim 5, **characterized in that** a plurality of pairs each having a polynomial coefficient and a transformation coefficient are also formed (92), with the polynomial coefficient of such a pair being eliminated (98) when a statistical dependence between the polynomial coefficient and the transformation coefficient of the pair is greater than a defined threshold value.

7. The method of one of claims 1 to 6, **characterized in that** a characteristic value that represents a quality criterion for the coordinate measuring machine is determined (78) as a function of the difference between the first and the second number.

8. The method of one of claims 1 to 7, **characterized in that** the eliminated polynomial coefficients are provided in a knowledge database (60) together with parameter data that represent the coordinate measuring machine.

9. The method of one of claims 1 to 8, **characterized in that** the reference measured values are picked up using a tactile sensor that has a sensor base (20), a probe element (22) movable relative to the sensor base, and a number of measuring elements (23) which are designed to determine a relative position of the probe element (22) relative to the sensor base (20), with the polynomial coefficients representing nonlinear properties of the measuring elements (23).

10. The method of one of claims 1 to 8, **characterized in that** the reference measured values are picked up with the aid of a non-contact measuring sensor.

11. A coordinate measuring machine comprising a reception (12) for a measurement object (32), comprising a sensor (20) for generating position-dependent measured values of the measurement object, and comprising an evaluation and control unit (34) for controlling the sensor (20) and for processing the measured values, with the evaluation and control unit (34) being designed for determining calibration data using a reference measurement object having known properties, and with the calibration data comprising a number of polynomial coefficients that are selected for correcting nonlinear measuring errors of the coordinate measuring machine using at least one polynomial transformation, **characterized in that** the evaluation and control unit (34) is designed for reducing (70, 72) a first number of polynomial coefficients in an iterative method to a lesser second number, with a plurality of pairs of polynomial coefficients being formed (80), and with a polynomial coefficient of a pair being eliminated (88) in each case when a statistical dependence between the polynomial coefficients of the pair is greater than a defined threshold value.

12. A computer program comprising program code designed for executing a method according to one of claims 1 to 10 when the program code runs in an evaluation and control unit of a coordinate measuring machine.

## Revendications

1. Procédé d'étalonnage d'un appareil (10) de mesure de coordonnées, le procédé comportant les étapes qui consistent à :

placer (48) dans un volume de mesure de l'appareil (10) de mesure de coordonnées un objet (32) de mesure de référence qui présente des propriétés connues,
enregistrer (52) plusieurs valeurs de mesure de référence sur l'objet (32) de mesure de référence,
déterminer (58, 64, 66) des données d'étalonnage à l'aide des valeurs de mesure de référence et des propriétés connues,
les données d'étalonnage contenant un premier nombre de coefficients (PK) de polynôme configurés pour corriger les erreurs non linéaires de mesure de l'appareil (10) de mesure de coordonnées à l'aide d'au moins une transformation polynomiale, **caractérisé en ce que**
le premier nombre de coefficients (PK) de polynôme est réduit à un deuxième nombre plus petit par une opération itérative (70, 72, 74),
**en ce que** plusieurs paires de coefficients de polynôme sont formées (80) et
**en ce que** chaque coefficient de polynôme d'une paire est éliminé (88) si une dépendance statistique entre les coefficients de polynôme de la paire est plus grande qu'une valeur de seuil définie.

2. Procédé selon la revendication 1, **caractérisé en ce que**, pour chaque paire de coefficients de polynôme, une valeur de corrélation est déterminée (82) en tant que mesure de la dépendance statistique, la valeur de corrélation représentant une corrélation croisée entre les coefficients de polynôme de la paire.

3. Procédé selon la revendication 2, **caractérisé en ce que** le niveau de la valeur de corrélation est comparé (84) à une valeur de seuil qui représente une corrélation croisée supérieure à 0,4, de préférence supérieure à 0,6 et de façon particulièrement préférée supérieure à environ 0,8.

4. Procédé selon l'une des revendications 1 à 3, **caractérisé en ce que** chaque coefficient de polynôme représente (62) un ordonnancement de polynôme, le coefficient de polynôme de la paire qui représente un ordonnancement plus élevé du polynôme étant éliminé.

5. Procédé selon l'une des revendications 1 à 4, **caractérisé en ce que** les données d'étalonnage contiennent (64) en outre des coefficients de transformation d'une matrice de transformation qui représente une relation linéaire entre les valeurs de mesure de référence et les propriétés connues.

6. Procédé selon la revendication 5, **caractérisé en ce qu'**il forme (92) en outre plusieurs paires qui contiennent chacune un coefficient de polynôme et un coefficient de transformation, le coefficient de polynôme de cette paire étant éliminé (98) s'il existe une dépendance statistique supérieure à une valeur de seuil définie entre le coefficient de polynôme et le coefficient de transformation de la paire.

7. Procédé selon l'une des revendications 1 à 6, **caractérisé en ce qu'**une valeur caractéristique qui représente un critère de qualité de l'appareil de mesure de coordonnées est formée (78) en fonction de la différence entre le premier et le deuxième nombre.

8. Procédé selon l'une des revendications 1 à 7, **caractérisé en ce que** les coefficients de polynôme éliminés sont prévus dans une base de données de connaissances (60) en même temps que des données de paramètres qui représentent l'appareil de mesure de coordonnées.

9. Procédé selon l'une des revendications 1 à 8, **caractérisé en ce que** les valeurs de mesure de référence sont enregistrées à l'aide d'un détecteur tactile qui présente une base de détecteur (20), un élément palpeur (22) pouvant être déplacé par rapport à la base du détecteur et plusieurs éléments de mesure (23) configurés pour déterminer la position relative de l'élément palpeur (22) par rapport à la base (20) du détecteur, les coefficients de polynôme représentant des propriétés non linéaires des éléments de mesure (23).

10. Procédé selon l'une des revendications 1 à 8, **caractérisé en ce que** les valeurs de mesure de référence sont enregistrées à l'aide d'un détecteur qui effectue la mesure sans contact.

11. Appareil de mesure de coordonnées présentant
un logement (12) pour un objet de mesure (32),
un détecteur (20) qui forme des valeurs de mesure de l'objet de mesure en fonction de la position et
une unité (34) d'évaluation et de commande qui commande le détecteur (20) et qui traite les valeurs de mesure,
l'unité (34) d'évaluation et de commande étant configurée pour déterminer des données d'étalonnage à l'aide d'un objet de mesure de référence présentant des propriétés connues,
les données d'étalonnage contenant un nombre de coefficients de polynôme configurés pour corriger des erreurs non linéaires de mesure de l'appareil de mesure de coordonnées à l'aide d'au moins une transformation polynomiale,
**caractérisé en ce que**
l'unité (34) d'évaluation et de commande est configurée de manière à réduire (70, 72) par une opération itérative un premier nombre de coefficients de polynôme à un deuxième nombre plus petit,
**en ce que** plusieurs paires de coefficients de polynôme sont formées (80) et
**en ce qu'**un coefficient de polynôme de chaque paire est éliminé (88) s'il existe entre les coefficients de polynôme de la paire une dépendance statistique supérieure à une valeur de seuil définie.

12. Programme informatique doté d'un code de programme configuré pour exécuter un procédé selon l'une des revendications 1 à 10 lorsque le code de programme se déroule dans une unité d'évaluation et de commande d'un appareil de mesure de coordonnées.

Fig.1

Fig.2

70

80 — Paar P [PK$_i$; PK$_m$] bilden

82 — Kreuzkorrelation k ([PK$_i$; PK$_m$]) bestimmen

86

84 — k > 0,8 ?  n

88 — PK$_{i/m}$ = 0; abhängig von Polynomordnung

60

**Fig.3**

70'

90

Paar P [PK$_i$; K$_m$] bilden

92 — Kreuzkorrelation k ([PK$_i$; K$_m$]) bestimmen

96

94 — k > 0,8 ?  n

98 — PK$_i$ = 0

60

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1051596 B1